# EUROPEAN PATENT SPECIFICATION

(11) **EP 4 354 290 B1**
(45) Date of publication and mention of the grant of the patent: **23.09.2026**
(21) Application number: 22820329.5
(22) Date of filing: 09.06.2022
(51) Int. Cl.: G06F 9/46, G06F 9/54, G06T 1/00

(54) **INFORMATION PROCESSING DEVICE, PROGRAM, AND DATA PROCESSING METHOD**
INFORMATIONSVERARBEITUNGSVORRICHTUNG, PROGRAMM UND DATENVERARBEITUNGSVERFAHREN
DISPOSITIF DE TRAITEMENT D'INFORMATIONS, PROGRAMME ET PROCÉDÉ DE TRAITEMENT DE DONNÉES

(30) Priority: 09.06.2021 JP 2021096721
(43) Date of publication of application: 17.04.2024
(73) Proprietor: Ultimatrust Co., Ltd., Tokyo 101-0062 (JP)
(72) Inventor: FUKUHARA Ichiro, Tokyo 101-0062 (JP)
(74) Representative: Ström & Gulliksson AB
(86) International application number: PCT/JP2022/023375
(87) International publication number: WO 2022/260150

(56) References cited:
- JP-A- 2015 018 379
- JP-A- 2015 018 379
- US-A1- 2010 095 302

## Description

### TECHNICAL FIELD

The present invention relates to an information processing device, a program, and a data processing method.

### BACKGROUND ART

Conventionally, a system that processes a plurality of types of input data and outputs a plurality of data has been widely developed and used. For example, Patent Documents 1 to 4 describe this type of technology. Citation List

### Patent Document

Patent Document 1: Japanese Unexamined Patent Application, Publication No. H07-056606
Patent Document 2: Japanese Unexamined Patent Application, Publication No. 2002-049418
Patent Document 3: Japanese Patent No. 6236035
Patent Document 4: Japanese Patent No. 5284433

Document US 2010/095302 A1 relates to a distributed processing system in which a management apparatus distributes tasks among multiple terminals connected via a network. Application information describing task execution order and data transfer relationships is used to determine where tasks are executed, and communication tasks are generated so that data required by one task is transmitted from a source apparatus to the apparatus executing the dependent task. This invention therefore addresses distributed execution of interrelated tasks and transfer of task input/output data between apparatuses.

In same-terminal situations, it is contemplated obtaining input data from data output by another task, including access to output buffers and transfer based on generated commands.

Document JP 2015/018379 A relates to execution of a plurality of component programs in a CPU/GPU environment, with the aim of reducing processing time by avoiding repeated data exchange between the CPU and GPU for each individual program. This document discloses combining component programs into an integrated program and using scenario data indicating the execution order of the component programs, together with input data and an initial scenario index, so that an accelerator can successively identify and execute component programs. The document thus concerns pipeline processing in which processing flow is defined by scenario data and executed in sequence on the accelerator side. Its focus is on reducing overhead in accelerator-based pipeline execution rather than on distributed task allocation across networked apparatuses.

### DISCLOSURE OF THE INVENTION

Problems to be Solved by the Invention

The system required by a customer is constructed according to the purpose and demand. Therefore, when a series of processes for generating output data from input data is designed every time a system is constructed, the system becomes complex or the workload such as the number of steps required for construction of the system increases. The complexity and enlargement of the system may make programming mistakes and bugs easier to occur.

The present invention addresses the abovementioned problem, and it is an object of the present invention to provide an information processing device, a program, and a data processing method capable of facilitating construction of a system that processes input data and outputs output data, thereby reducing workload.

### Means for Solving the Problems

An information processing device, a program and a data processing method according to aspects of the present invention are defined in the appended independent patent claims.

### Effects of the Invention

According to the present invention, it is possible to provide an information processing device, a program, and a data processing method that facilitate construction of a system that processes input data and outputs output data, thereby reducing workload.

### BRIEF DESCRIPTION OF THE DRAWINGS

FIG. 1 is a block diagram showing an information processing device, an external input, and an external output according to an embodiment of the present invention;
FIG. 2 is a block diagram showing functions of the information processing device according to the embodiment of the present invention;
FIG. 3 is a block diagram showing a configuration of a task execution unit according to an embodiment of the present invention;
FIG. 4 is a flowchart of a task according to a first embodiment of the present invention;
FIG. 5 is a block diagram showing an information processing device, an external input, and an external output according to the first embodiment of the present invention;
FIG. 6 is a block diagram showing an information processing device, an external input, and an external output according to a first modification of the first embodiment of the present invention;
FIG. 7 is a block diagram showing an information processing device, an external input, and an external output according to a second embodiment of the present invention; and
FIG. 8 is a block diagram showing an information processing device, an external input, and an external output according to a second modification of the second embodiment of the present invention.

### PREFERRED MODE FOR CARRYING OUT THE INVENTION

Hereinafter, an information processing device according to an embodiment of the present invention will be described with reference to the accompanying drawings. In the drawings, the same elements are denoted by the same reference numerals.

### (First Embodiment)

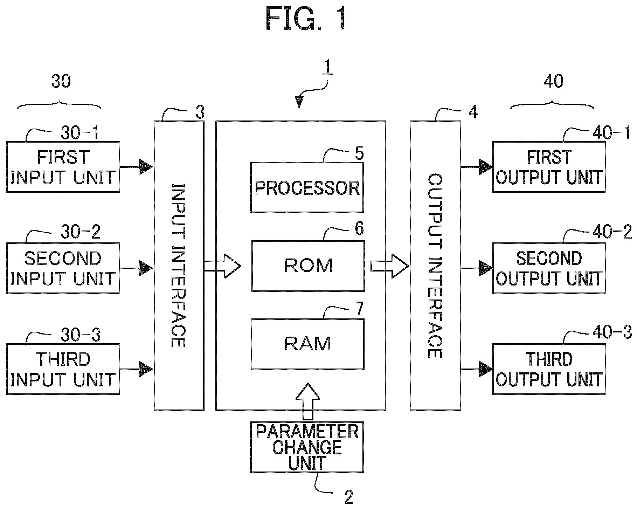

As shown in FIG. 1, the information processing device 1 according to a first embodiment is a computer including a processor 5, ROM (Read Only Memory) 6, and RAM (Random Access Memory) 7.

The processor 5 performs various calculations and processes such as calculations for executing tasks to be described later. The processor 5 is, for example, a CPU (central processing unit), MPU (micro processing unit), SoC (system on a chip), DSP (digital signal processor), GPU (graphics processing unit), ASIC (application specific integrated circuit), PLD (programmable logic device) or FPGA (field-programmable gate array). Alternatively, the processor 5 is a combination of a plurality of these. Further, the processor 5 may be a combination of these with a hardware accelerator and the like.

The ROM 6 and the RAM 7 are main storage devices of the information processing device 1. The ROM 6 is a non-volatile memory used exclusively for reading data. The ROM 6 stores programs such as firmware. The ROM 6 also stores data for use in the processor 5 to perform various kinds of processing. The RAM 7 is memory for use in reading and writing data. The RAM 7 is used as a work area or the like for temporarily storing data to be used when the processor 5 performs various kinds of processing. The RAM 7 is typically volatile memory.

The information processing device 1 receives data from a plurality of input units 30 such as a first input unit 30-1, a second input unit 30-2, and the like via the input interface 3. The information processing device 1 outputs data and/or signals at a plurality of output units 40 such as the first output unit 40-1 and the second output unit 40-2 via the output interface 4. The parameters stored in the RAM 7 are appropriately changed by a parameter changing unit 2.

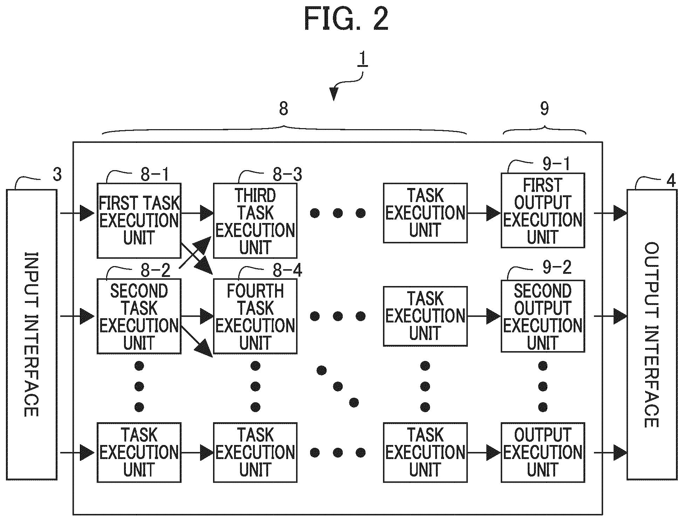

As shown in FIG. 2, the information processing device 1 according to the first embodiment includes, as functional units, a plurality of task execution units 8 such as a first task execution unit 8-1, a second task execution unit 8-2, and a plurality of output execution units 9 such as a first output execution unit 9-1, a second output execution unit 9-2, and the like. The task execution unit 8 and the output execution unit 9 are executed by the processor 5, the ROM 6, and the RAM 7 shown in FIG. 1, respectively. The plurality of task execution units 8 execute tasks without synchronization with each other.

The task execution unit 8 includes two kinds of task execution units 8. One is a task execution unit that acquires input data from the outside and generates output data as shown in the first task execution unit 8-1 in FIG. 2. Another task execution unit acquires output data generated by another task execution unit as input data and executes another task, as shown in the third task execution unit 8-3 in FIG. 2.

The information processing device 1 includes a plurality of task execution units 8 that acquire input data from the outside and generate output data. As shown in the task execution unit 8-1 and the task execution unit 8-2 in FIG. 2, a plurality of task execution units 8 acquire input data from the outside and generate output data.

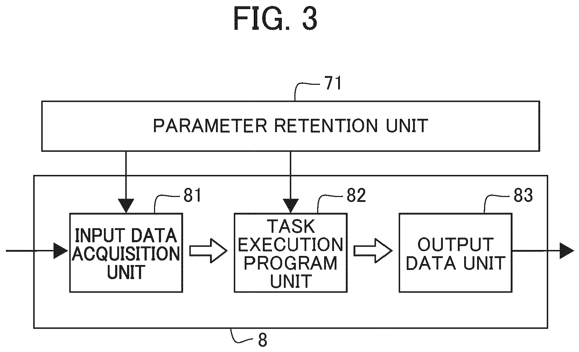

As shown in FIG. 3, each task execution unit 8 acquires input data by an input data acquisition unit 81. When a task is executed by the task execution program unit 82, the result of execution of the task is outputted to an output data unit 83. The connection destination information for acquiring the input data and the task information for defining the task execution condition are retained in a parameter retention unit 71, and the task execution program unit 82 executes the task based on the connection destination information and the task information.

Hereinafter, the connection destination information and the task information may be described without particular distinction using expressions of the parameter information.

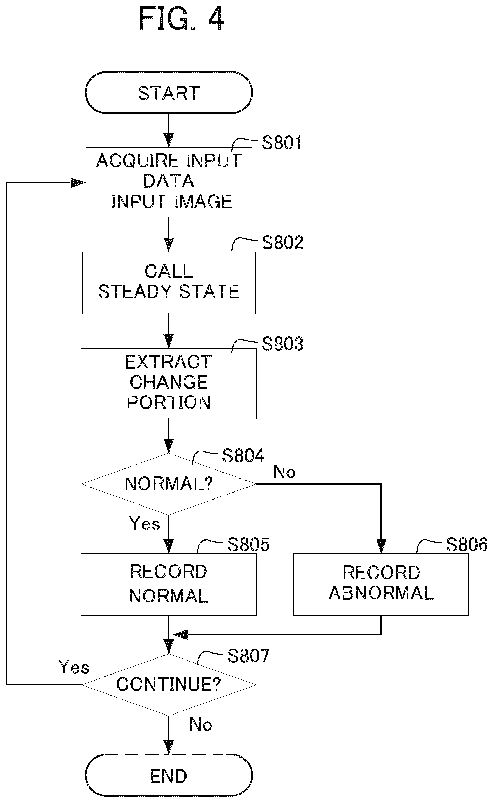

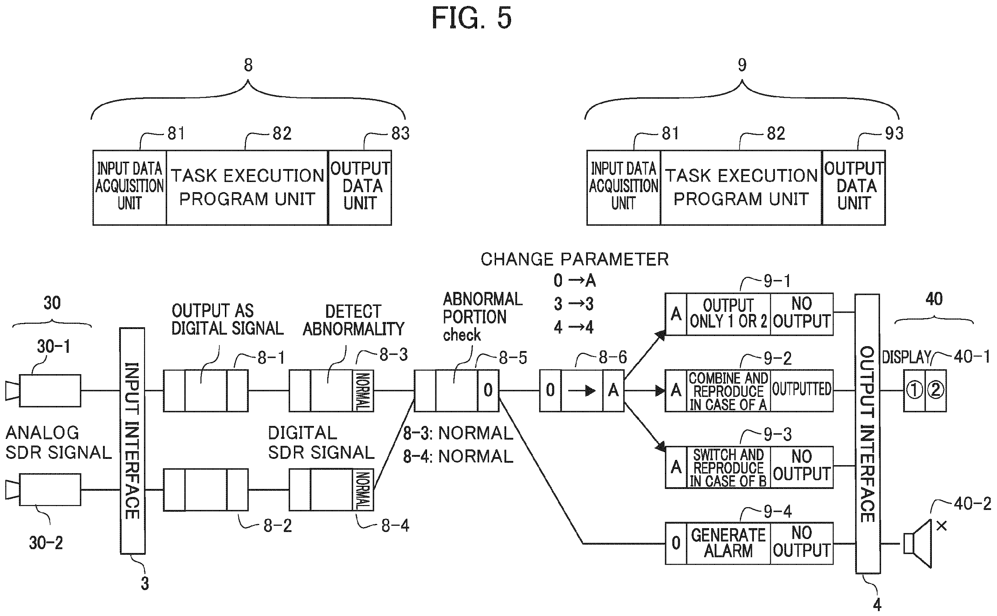

As an example of a task of the task execution unit 8, a task of the third task execution unit 8-3 described later will be described with reference to FIG. 4. The third task execution unit 8-3 detects a difference from the steady state in the input image data as an abnormality, and records that it is an abnormal state. When the third task execution unit 8-3 starts a task, first, an image is acquired as input data (step S801). Specifically, the third task execution unit 8-3 acquires the image data stored in the output data unit 8-3 of the task execution unit 8-1 described later with reference to FIG. 5, and the task execution unit 8-3 stores the acquired image in the input data acquisition unit 81 of the task execution unit 8-3. Here, it is preferable not to copy but rather to directly refer to the memory of the output data unit 83 of the task execution unit 8-1, or to directly use the data stored in the output data unit 83.

Next, a steady-state image stored in the ROM 6 or the RAM 7 is called (step S802). Next, the image obtained in step 801 and the image of the steady state are compared to extract a change portion (step S803). Then, it is determined whether the state is a normal state or an abnormal state (step S804). In a case in which it is a normal state, the fact that it is a normal state is recorded in the output data unit 83 of the third task execution unit 8-3 (step S805). In a case in which it is an abnormal state, the fact that it is an abnormal state is recorded in the output data unit 83 of the third task execution unit 8-3 (step S806). When the task is continued, the flow of the task returns to the input of an image (step S801). If the task is not continued, the task ends (END).

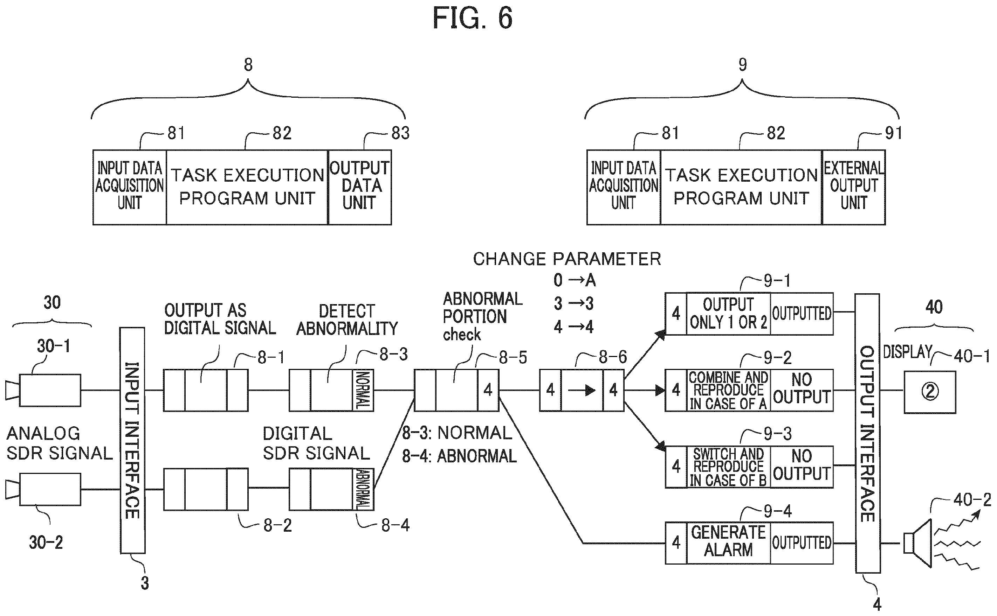

As the first embodiment of the information processing device according to the present invention, a system including the third task execution unit 8-3 and detecting an abnormal state will be described with reference to FIGS. 5 and 6.

In FIG. 3, the configuration of the task execution unit 8 is described with arrows. However, in FIG. 5 and FIG. 6, arrows indicating the relationships between the respective elements are omitted, and the task execution unit 8 is shown by a quadrangular figure only.

As shown in FIG. 5, the processor 5, the ROM 6, and the RAM 7 execute the output execution unit 9 including the input data acquisition unit 81 for acquiring input data, the task execution program unit 82, and an external output unit 93. The output execution unit 9 includes the input data acquisition unit 81 and the task execution program unit 82, similar to the task execution unit 8. Unlike the task execution unit 8, the task execution unit 9 includes the external output unit 93 that outputs a signal to the outside. In FIG. 5, similarly to the output execution unit 8, the output execution unit 9 is also shown by only a quadrangular figure while omitting arrows.

The input unit 30 includes a first input unit 30-1 including an analog camera of SDR (standard image resolution) and a second input unit 30-2 similarly including an analog camera of SDR input. FIG. 5 shows a case where there is no abnormality in both the first input unit 30-1 and the second input unit 30-2. FIG. 6 shows, as a first modification, a case where there is no abnormality in the first input unit 30-1 and there is an abnormality in the second input unit 30-2. Here, the case where there is an abnormality, for example, a case where the camera monitors the water level of the bridge and the river, and the bridge is damaged, or a case where the water level becomes abnormally high.

A case where there is no abnormality will be described with reference to FIG. 5. The first task execution unit 8-1 acquires a signal from the first input unit 30-1 via the input interface 3. The first task execution unit 8-1 executes a task of converting an analog signal into a digital signal (DSDR) of SDR and outputting the digital signal. This output is written in the output data unit 83, which is a storage area unique to the first task execution unit 8-1. When this output is acquired by the other task execution unit 8, the memory or the data storage address is directly referred to and acquired as input data.

Similarly, the second task execution unit 8-2 acquires a signal from the second input unit 30-2 via the input interface 3. The second task execution unit 8-2 executes a task of converting an analog signal into a digital signal (DSDR) of SDR and outputting the digital signal. This output is written in the output data unit 83, which is a storage area unique to the second task execution unit 8-2. When this output is acquired by the other task execution unit 8, the memory or the data storage address is directly referred to and acquired as input data.

The third task execution unit 8-3 acquires the output of the first task execution unit 8-1 in accordance with the parameter information stored in the parameter retention unit 71, and executes the task in accordance with the flowchart shown in FIG. 4. The third task execution unit 8-3 determines that there is no abnormality and it is normal, and outputs information indicating that it is normal (step S805). This output is written into the output data unit 83, which is a storage area unique to the third task execution unit 8-3. When this output is acquired by the other task execution unit 8, the memory or the data storage address is directly referred to and acquired as input data.

The fourth task execution unit 8-4 acquires the output of the second task execution unit 8-2 in accordance with the parameter information stored in the parameter retention unit 71, and executes the task in accordance with the flowchart shown in FIG. 4. The fourth task execution unit 8-4 determines that there is no abnormality and it is normal, and outputs information indicating that it is normal (step S805). This output is written in the output data unit 83, which is a storage area unique to the fourth task execution unit 8-4. When this output is acquired by the other task execution unit 8, the memory or the data storage address is directly referred to and acquired as input data.

The fifth task execution unit 8-5 specifies a camera that has detected an abnormality. The fifth task execution unit 8-5 acquires outputs of the third task execution unit 8-3 and the fourth task execution unit 8-4 in accordance with the parameter information retained in the parameter retention unit 71. As the parameter information, the fifth task execution unit outputs 3 when the output of the third task execution unit 8-3 indicates an abnormality, 4 when the output of the fourth task execution unit 8-4 indicates an abnormality, and 0 when there is no abnormality. In the first embodiment, since both outputs are normal, the fifth task execution unit outputs 0 because there is no abnormality. This output is written in the output data unit 83, which is a storage area unique to the fifth task execution unit 8-5. When this output is acquired by the other task execution unit 8, the memory or the data storage address is directly referred to and acquired as input data.

The sixth task execution unit 8-6 acquires the output of the fifth task execution unit 8-5 in accordance with the parameter information stored in the parameter retention unit 71. The sixth task execution unit 8-6 outputs a processing number according to the parameter information stored in the parameter retention unit 71 based on the acquired information. According to the parameter information, A is outputted as a processing number when the input is 0, 3 is outputted as a processing number when the input is 3, and 4 is outputted as a processing number when the input is 4. Here, A is outputted in accordance with the parameter information retained by the parameter retention unit 71. This output is written in the output data unit 83, which is a storage area unique to the sixth task execution unit 8-6. When this output is acquired by the other task execution unit 8, the memory or the data storage address is directly referred to and acquired as input data.

Here, the parameter retention unit 71 associates the processing number A with the input 0 as the parameter information. This association can be appropriately changed by the parameter changing unit 2.

The output execution unit 9 includes a first output execution unit 9-1 to a third output execution unit 9-3. The first output execution unit 9-1 acquires the output of the task execution unit 8-6 in accordance with the parameter information retained in the parameter retention unit 71. The first output execution unit 9-1 outputs the output of the task execution unit 8-1, which is an input associated with 3 when the acquired information is 3, outputs the output of the task execution unit 8-2, which is an input associated with 4 when the acquired information is 4, and does not output the output when the acquired information is other than 3 or 4. In the first embodiment, since the output of the task execution unit 8-6 is A, there is no output from the first output execution unit 9-1.

The second output execution unit 9-2 acquires the output of the task execution unit 8-6 in accordance with the parameter information retained in the parameter retention unit 71. When the acquired information is A, the second output execution unit acquires the output of the task execution unit 8-1 and the output of the task execution unit 8-2 associated with A, combines them, and outputs the combined output. In the first embodiment, videos of cameras are used, and are combined so that the videos are aligned in the left-right direction. In cases other than A, output is not performed. In the first embodiment, since the acquired information is A, the output of the task execution unit 8-1 and the output of the task execution unit 8-2 are acquired, combined and outputted. In FIG. 5, the output of the task execution unit 8-1 is 1, and the output of the task execution unit 8-2 is 2, and the videos are represented side by side with a number 1 with a circle and a number 2 with a circle.

The third output execution unit 9-3 acquires the output of the task execution unit 8-6 in accordance with the parameter information retained in the parameter retention unit 71. When the acquired information is B, the third output execution unit acquires the output of the task execution unit 8-1 and the output of the task execution unit 8-2 associated with B, and outputs them by switching them every five seconds. In the first embodiment videos of cameras are used, and the videos are switched and outputted. In cases other than B, output is not performed. In the first embodiment, since the acquired information is A, there is no output from the third output execution unit 9-3.

The fourth output execution unit 9-4 has a task of transmitting an alarm, and outputs an alarm sound signal when there is an abnormality. The fourth output execution unit 9-4 acquires the output of the task execution unit 8-5 in accordance with the parameter information retained in the parameter retention unit 71. When the acquired value is 0, the alarm sound signal is not outputted, and when the acquired value is 1, the alarm sound signal is outputted. The acquired information is the output of the task execution unit 8-5 and is 0 as described above. Therefore, the alarm sound signal is not outputted.

The output unit 40 includes a first output unit 40-1 and a second output unit 40-2. The first output unit 40-1 is a monitor, and the second output unit is a speaker. The first output unit 40-1 is connected to the first output execution unit 9-1, the second output execution unit 9-2, and the third output execution unit 9-3 via the output interface 4. The output is outputted only from the second output execution unit 9-2 as described above, and the first output unit 40-1 displays the video from the second output execution unit 9-2. In the first embodiment, a composite screen of the output of the task execution unit 8-1 and the output of the execution unit 8-2 is displayed.

Since the alarm sound signal from the fourth output execution unit 9-4 is not outputted in the speaker of the second output unit 40-2, the alarm sound does not sound.

Next, a case where an abnormality occurs at a place where the camera of the second input unit 30-2 is observing will be described with reference to FIG. 6.

The third task execution unit 8-3 outputs information indicating that there is no abnormality, i.e., is normal. The fourth task execution unit 8-4 outputs information indicating that there is an abnormality. This output is written in the output data unit 83, which is a storage area unique to each task execution unit 8. When this output is acquired by the other task execution unit 8, the memory or the data storage address is directly referred to and acquired as input data.

The fifth task execution unit 8-5 specifies a camera which has detected an abnormality. The fifth task execution unit 8-5 acquires outputs from the third and fourth task execution units 8 in accordance with the parameters retained in the parameter retention unit 71. The fifth task execution unit 8-5 outputs, as the parameter information, 3 when the output of the third task execution unit 8-3 indicates an abnormality, and 4 when the output of the fourth task execution unit 8-4 indicates an abnormality. In the first modification, since the output of the fourth task execution unit 8-4 indicates an abnormality, 4 is outputted. This output is written in the output data unit 83, which is a storage area unique to the fifth task execution unit 8-5. When this output is acquired by the other task execution unit 8, the memory or the data storage address is directly referred to and acquired as input data.

The sixth task execution unit 8-6 acquires the output of the fifth task execution unit 8-5 in accordance with the parameter information stored in the parameter retention unit 71, and outputs the processing number in accordance with the parameter information stored in the parameter retention unit 71 for the acquired information. The sixth task execution unit 8-6 follows the parameter information in which A as a processing number is outputted when the input is 0, 3 as a processing number is outputted when the input is 3, and 4 as a processing number is outputted when the input is 4. Here, since the input is 4, the task execution unit 8-6 outputs 4 in accordance with the parameter information retained by the parameter retention unit 71. This output is written in the output data unit 83, which is a storage area unique to the sixth task execution unit 8-6. When this output is acquired by the other task execution unit 8, the memory or the data storage address is directly referred to, and the output of the sixth task execution unit 8-6 is acquired as input data by the output execution unit 9.

The output execution unit 9 includes a first output execution unit 9-1 to a fourth output execution unit 9-4.

The first output execution unit 9-1 acquires the output of the sixth task execution unit 8-6 in accordance with the parameter information retained in the parameter retention unit 71. The first output execution unit outputs an output of the task execution unit 8-1, which is an input associated with 3, when the acquired information is 3, outputs an output of the task execution unit 8-2, which is an input associated with 4, when the acquired information is 4, and does not output an output when the acquired information is other than the above. In the first modification, since the output of the task execution unit 8-6 is 4, the output of the task execution unit 8-2, which is an input associated with 4, is outputted as a video signal to the output interface 4.

The second output execution unit 9-2 acquires the output of the task execution unit 8-6 in accordance with the parameter information retained in the parameter retention unit 71. When the acquired information is A, the second output execution unit 9-2 acquires outputs of the first task execution unit 8-1 and the second task execution unit 8-2 associated with A, combines them, and outputs the combined outputs. In cases other than A, output is not performed. In the first modification, since the acquired information is 4, there is no output from the second output execution unit 9-2.

The third output execution unit 9-3 acquires the output of the task execution unit 8-6 in accordance with the parameter information retained in the parameter retention unit 71. When the acquired information is B, the third output execution unit 9-3 acquires outputs from the first task execution unit 8-1 and the second task execution unit 8-2 associated with B, and outputs them by switching them every five seconds. In cases other than B, output is not performed. In the first modification, since the acquired information is 4, there is no output from the third output execution unit 9-3.

The fourth output execution unit 9-4 outputs an alarm sound when an abnormality occurs. The fourth output execution unit acquires the output of the task execution unit 8-5 in accordance with the parameter information retained in the parameter retention unit 71. When the acquired information is 0, an alarm sound signal is not outputted, and when the acquired information is other than 0, an alarm sound signal is outputted. The acquired information is 4 as described above. Accordingly, the alarm sound signal is outputted from the fourth output execution unit 9-4.

The output unit 40 includes a first output unit 40-1 and a second output unit 40-2. The first output unit 40-1 is a monitor. The output is outputted only from the first output execution unit 9-1 as described above, and the first output unit 40-1 displays the video from the first output execution unit 9-1. Specifically, the first output unit 40-1 outputs the video from the task execution unit 8-2. In FIG. 6, the output from the first output unit 40-1 is represented by a numeral 2 with a circle.

The speaker, which is the second output unit 40-2, reproduces the alarm sound signal outputted from the fourth output execution unit 9-4, i.e., sounds the alarm sound.

### (Second Embodiment)

In the first embodiment, the input unit 30 has two systems, i.e., the first system and the second system, but in the second embodiment, a case where the input unit 30 has the four systems from the first system to the fourth system will be described with reference to FIGS. 1 to 3, 7 and 8. For comparison of the embodiments, FIGS. 5 and 6 are referred to as appropriate.

Similarly to the first embodiment, the input unit 30 includes a first input unit 30-1 including a camera for photographing at an analog SDR resolution, and a second input unit 30-2 similarly including a camera for photographing at an analog SDR resolution. Further, the input unit 30 includes a seventh input unit 30-7 including a digital camera having a resolution of 2K1K and an eighth input unit 30-8 including a digital camera having a resolution of 4K2K.

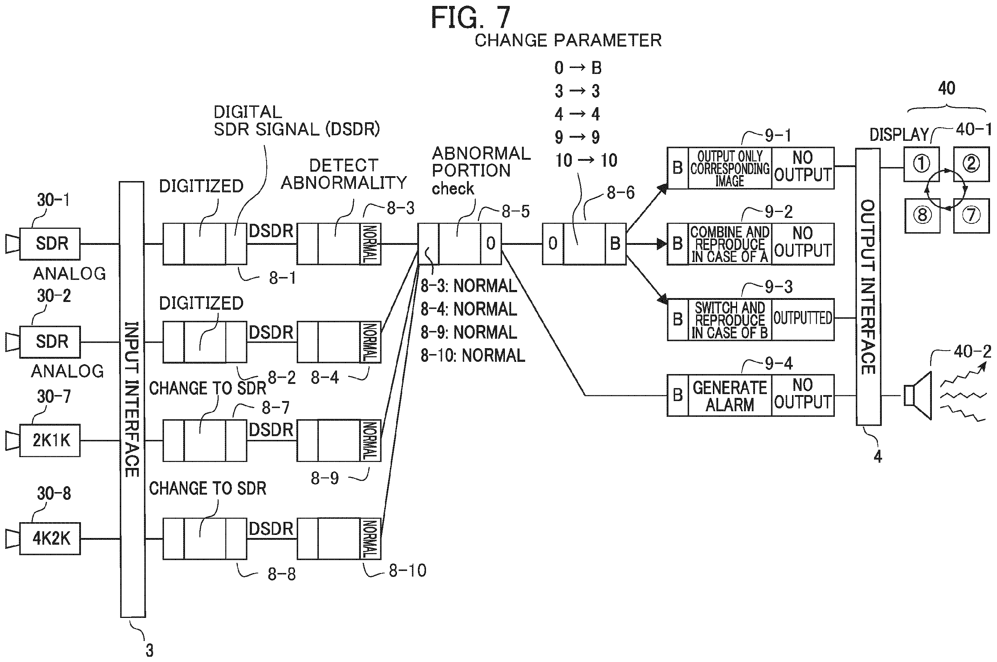

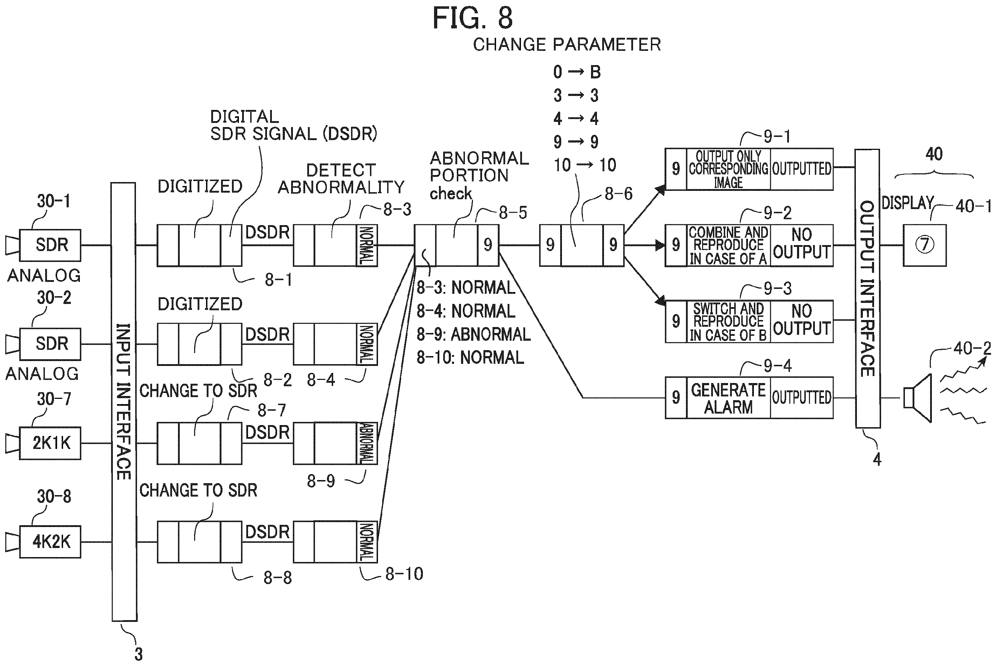

FIG. 7 shows a case where there is no abnormality in the input unit 30. FIG. 8 shows a second modification in which only the seventh input unit 30-7 has an abnormality and the other input units 30 do not have an abnormality. Here, a case where an abnormality exists is, for example, a case where the camera monitors the water level of the bridge and the river, and the bridge is damaged, or a case where the water level becomes abnormally high.

As in the first embodiment, the first task execution unit 8-1 acquires a signal from the first input unit 30-1 via the input interface 3. The first task execution unit 8-1 executes a task of converting an analog signal into a digital signal and outputting the digital signal. This output is written in the output data unit 83, which is a storage area unique to the first task execution unit 8-1. When this output is acquired by the other task execution unit 8, the memory or the data storage address is directly referred to and acquired as input data.

As in the first embodiment, the second task execution unit 8-2 acquires a signal from the second input unit 30-2 via the input interface 3. The second task execution unit 8-2 executes a task of converting an analog signal into a digital signal and outputting the digital signal. This output is written in the output data unit 83, which is a storage area unique to the second task execution unit 8-2. When this output is acquired by the other task execution unit 8, the memory or the data storage address is directly referred to and acquired as input data.

The seventh task execution unit 8-7 acquires a signal from the seventh input unit 30-7 via the input interface 3. The seventh task execution unit 8-7 executes a task of converting a 2K1K digital signal into a SDR digital signal (DSDR) and outputting the signal. This output is written in the output data unit 83, which is a storage area unique to the seventh task execution unit 8-7. When this output is acquired by the other task execution unit 8, the memory or the data storage address is directly referred to and acquired as input data.

The eighth task execution unit 8-8 acquires a signal from the eighth input unit 30-8 via the input interface 3. The eighth task execution unit 8-8 executes a task of converting 4K2K digital signals into SDR digital signals (DSDR) and outputting them. This output is written in the output data unit 83, which is a storage area unique to the eighth task execution unit 8-8. When this output is acquired by the other task execution unit 8, the memory or the data storage address is directly referred to and acquired as input data.

The task of the third task execution unit 8-3 acquires the output of the first task execution unit 8-1 in accordance with the parameter information stored in the parameter retention unit 71, and executes the task in accordance with the flowchart shown in FIG. 4. The third task execution unit 8-3 determines that there is no abnormality and it is normal, and outputs information indicating that it is normal (step S805). This output is written into the output data unit 83, which is a storage area unique to the third task execution unit 8-3. When this output is acquired by the other task execution unit 8, the memory or the data storage address is directly referred to and acquired as input data.

In the fourth task execution unit 8-4, the ninth task execution unit 8-9, and the tenth task execution unit, only the parameter information is different, and the contents or the programs themselves are the same as those of the third task execution unit 8-3. The fourth task execution unit 8-4 acquires the output of the second task execution unit 8-2, the ninth task execution unit 8-9 acquires the output of the seventh task execution unit 8-7, and the tenth task execution unit 8-10 acquires the output of the eighth task execution unit 8-8. In accordance with the flowchart shown in FIG. 4, each task execution unit 8 executes a task and is written in the output data unit 83, which is a storage area unique to each task execution unit 8. When this output is acquired by the other task execution unit 8, the memory or the data storage address is directly referred to and acquired as input data by the other task execution unit 8.

The fifth task execution unit 8-5 specifies a camera that has detected an abnormality. The fifth task execution unit 8-5 acquires outputs from the third, fourth, ninth, and tenth task execution units 8 in accordance with the parameters retained in the parameter retention unit 71. As the parameter information, the fifth task execution unit 8-5 outputs 3 when the output of the third task execution unit 8-3 indicates an abnormality, 4 when the output of the fourth task execution unit 8-4 indicates an abnormality, 9 when the output of the ninth task execution unit 8-9 indicates an abnormality, 10 when the output of the tenth task execution unit 8-10 indicates an abnormality, and 0 when there is no abnormality. In the second embodiment, since there is no abnormality, 0 is outputted. This output is written in the output data unit 83, which is a storage area unique to the fifth task execution unit 8-5. When this output is acquired by the other task execution unit 8, the memory or the data storage address is directly referred to and acquired as input data.

The sixth task execution unit 8-6 acquires the output of the fifth task execution unit 8-5 in accordance with the parameter information stored in the parameter retention unit 71, and outputs the processing number in accordance with the parameter information stored in the parameter retention unit 71 for the acquired information. In accordance with the parameter information, the sixth task execution unit 8-6 outputs B as a processing number when the input is 0, outputs 3 as a processing number when the input is 3, outputs 4 as a processing number when the input is 4, outputs 9 as a processing number when the input is 9, and outputs 10 as a processing number when the input is 10. Here, since the input is 0, the sixth task execution unit 8-6 outputs B in accordance with the parameter information retained by the parameter retention unit 71. This output is written in the output data unit 83, which is a storage area unique to the sixth task execution unit 8-6. When this output is acquired by the other task execution unit 8, the memory or the data storage address is directly referred to, and the output of the sixth task execution unit 8-6 is acquired as input data.

Here, the parameter retention unit 71 associates the processing number B with the input 0 as the parameter information. This association can be appropriately changed by the parameter changing unit 2.

The output execution unit 9 includes a first output execution unit 9-1 to a fourth output execution unit 9-4.

The first output execution unit 9-1 acquires the output of the sixth task execution unit 8-6 in accordance with the parameter information retained in the parameter retention unit 71. As compared with the first embodiment, only parameter information is different. The first output execution unit outputs the output of the task execution unit 8-1, which is an input associated with 3 when the acquired information is 3, outputs the output of the task execution unit 8-2, which is an input associated with 4 when the acquired information is 4, outputs the output of the task execution unit 8-7, which is an input associated with 9 when the acquired information is 9, outputs the output of the task execution unit 8-8, which is an input associated with 10 when the acquired information is 10, and does not output the output when the acquired information is other than the above. In the second embodiment, since the output of the task execution unit 8-6 is B, there is no output from the first output execution unit 9-1.

The second output execution unit 9-2 acquires the output of the task execution unit 8-6 in accordance with the parameter information retained in the parameter retention unit 71. As compared with the first embodiment, only the parameter information is different. When the acquired information is A, the second output execution unit 9-2 acquires outputs from the first task execution unit 8-1, the second task execution unit 8-2, the seventh task execution unit 8-7, and the eighth task execution unit 8-8 associated with A, combines them, and outputs the combined outputs. In the second embodiment, images from four cameras are combined such that the images are aligned at the up, down, left, and right positions, respectively. When the acquired information is other than A, the second output execution unit 9-2 does not perform output. In the second embodiment, since the acquired information is B, there is no output from the second output execution unit 9-2.

The third output execution unit 9-3 acquires the output of the task execution unit 8-6 in accordance with the parameter information retained in the parameter retention unit 71. As compared with the first embodiment, only the parameter information is different. When the acquired information is B, the third output execution unit 9-3 acquires outputs from the first task execution unit 8-1, the second task execution unit 8-2, the seventh task execution unit 8-7, and the eighth task execution unit 8-8 associated with B, and outputs them by switching them every five seconds. In the second embodiment, images from four cameras are used, and the images are switched and outputted. In cases other than B, output is not performed. In the second embodiment, since the acquired information is B, the video is switched and the third output execution unit 9-3 outputs the video signal.

The fourth output execution unit 9-4 outputs an alarm sound when an abnormality occurs. The fourth output execution unit acquires the output of the task execution unit 8-5 in accordance with the parameter information retained in the parameter retention unit 71. When the acquired information is 0, an alarm sound signal is not outputted, and when the acquired information is other than 0, an alarm sound signal is outputted. The acquired information is 0 as described above. Accordingly, the alarm sound signal is not outputted from the fourth output execution unit 9-4.

The output unit 40 includes a first output unit 40-1 and a second output unit 40-2. This configuration is the same as that of the first embodiment. The first output unit 40-1 is a monitor, and the second output unit is a speaker. The first output unit 40-1 is connected to the first output execution unit 9-1, the second output execution unit 9-2, and the third output execution unit 9-3 via the output interface 4. The output is outputted only from the third output execution unit 9-3 as described above, and the first output unit 40-1 displays the video from the third output execution unit 9-3. In the second embodiment, the output screens of the first task execution unit 8-1, the second task execution unit 8-2, the seventh task execution unit 8-7, and the eighth task execution unit 8-8 are switched every five seconds and displayed.

Since the alarm sound signal is not outputted from the fourth output execution unit 9-4, the speaker of the second output unit 40-2 does not sound the alarm sound.

Next, a case where an abnormality occurs at a place observed by the camera of the seventh input unit 30-7 will be described with reference to FIG. 8. The system configuration is the same as that of FIG. 7.

The third task execution unit, the fourth task execution unit, and the ninth task execution unit output information indicating that there is no abnormality. The tenth task execution unit outputs information indicating that there is an abnormality. This output is written in the output data unit 83, which is a storage area unique to the fifth task execution unit 8-5. When this output is acquired by the other task execution unit 8, the memory or the data storage address is directly referred to and acquired as input data.

The fifth task execution unit 8-5 specifies a camera that has detected an abnormality. The fifth task execution unit 8-5 acquires outputs from the third, fourth, ninth, and tenth task execution units 8 in accordance with the parameters retained in the parameter retention unit 71. As the parameter information, 3 is outputted when the output of the third task execution unit 8-3 indicates an abnormality, 4 is outputted when the output of the fourth task execution unit 8-4 indicates an abnormality, 9 is outputted when the output of the ninth task execution unit 8-9 indicates an abnormality, 10 is outputted when the output of the tenth task execution unit 8-10 indicates an abnormality, and 0 is outputted when there is no abnormality. In the second modification, since the output of the ninth task execution unit 8-9 indicates an abnormality, the fourth task execution unit 8-5 outputs 9. This output is written in the output data unit 83, which is a storage area unique to the fifth task execution unit 8-5. When this output is acquired by the other task execution unit 8, the memory or the data storage address is directly referred to and acquired as input data.

The sixth task execution unit 8-6 acquires the output of the fifth task execution unit 8-5 in accordance with the parameter information stored in the parameter retention unit 71, and outputs the processing number in accordance with the parameter information stored in the parameter retention unit 71 for the acquired information. When the input is 0, the sixth task execution unit 8-6 outputs B as a processing number, when the input is 3, outputs 3 as a processing number, when the input is 4, outputs 4 as a processing number, when the input is 9, outputs 9 as a processing number, and when the input is 10, outputs 10 as a processing number. Here, since the input is 9, 9 is written in the output data unit 83, which is a storage area unique to the sixth task execution unit 8-6, in accordance with the parameter information retained by the parameter retention unit 71. When this output is acquired by the other task execution unit 8, the memory or the data storage address is directly referred to and acquired as input data.

The output execution unit 9 includes a first output execution unit 9-1 to a fourth output execution unit 9-4.

The first output execution unit 9-1 acquires the output of the sixth task execution unit 8-6 in accordance with the parameter information retained in the parameter retention unit 71. The first output execution unit outputs the output of the task execution unit 8-1, which is an input associated with 3 when the acquired information is 3, outputs the output of the task execution unit 8-2, which is an input associated with 4 when the acquired information is 4, outputs the output of the task execution unit 8-7, which is an input associated with 9 when the acquired information is 9, outputs the output of the task execution unit 8-8, which is an input associated with 10 when the acquired information is 10, and does not output the output when the acquired information is other than the above. In the second embodiment, since the output of the task execution unit 8-6 is 9, the output of the task execution unit 8-7, which is an input associated with 9, is outputted as a video signal to the output interface 4.

The second output execution unit 9-2 acquires the output of the task execution unit 8-6 in accordance with the parameter information retained in the parameter retention unit 71. When the acquired information is A, the second output execution unit 9-2 acquires outputs from the first task execution unit 8-1, the second task execution unit 8-2, the seventh task execution unit 8-7, and the eighth task execution unit 8-8 associated with A, combines them, and outputs the combined outputs. In the second embodiment, video images from four cameras are used, and the second output execution unit 9-2 combines the video images so that they are aligned at the up, down, right, and left positions, respectively. In a case other than A, the second output execution unit 9-2 does not perform output. In the second modification, since the acquired information is 9, there is no output from the second output execution unit 9-2.

The third output execution unit 9-3 acquires the output of the task execution unit 8-6 in accordance with the parameter information retained in the parameter retention unit 71. When the acquired information is B, the third output execution unit 9-3 acquires outputs from the first task execution unit 8-1, the second task execution unit 8-2, the seventh task execution unit 8-7, and the eighth task execution unit 8-8 associated with B, and outputs them by switching them every five seconds. In the second embodiment, images from four cameras are used, and the images are switched and outputted. In cases other than B, output is not performed. In the second modification, since the acquired information is 9, there is no output from the third output execution unit 9-3.

The fourth output execution unit 9-4 outputs an alarm sound when an abnormality occurs. The fourth output execution unit acquires the output of the task execution unit 8-5 in accordance with the parameter information retained in the parameter retention unit 71. When the acquired information is 0, the alarm sound signal is not outputted, and when the acquired information is other than 0, the fourth output execution unit 9-4 outputs the alarm sound signal. The acquired information is 9 as described above. Accordingly, the alarm sound signal is outputted from the output execution unit 9-4.

The output unit 40 includes a first output unit 40-1 and a second output unit 40-2. This configuration is the same as that of the first embodiment. The first output unit 40-1 is a monitor, and the second output unit is a speaker. The first output unit 40-1 is connected to the third output execution unit 9-3 from the first output execution unit 9-1 via the output interface 4. The output is outputted only from the first output execution unit 9-1 as described above, and the first output unit 40-1 displays the video from the first output execution unit 9-1. That is, the video signal from the seventh task execution unit 8-7 is reproduced.

The speaker of the second output unit 40-2 reproduces the alarm sound signal outputted from the fourth output execution unit 9-4, i.e., sounds the alarm sound.

Hereinafter, the first embodiment and the second embodiment will be compared.

The task executed by the task execution unit 8 of the information processing device 1 is selected from a plurality of preset tasks. In other words, a plurality of preset task execution units are selected and combined, and the parameter retained in the parameter retention unit 71 defines the combination.

In the first embodiment, only two analog type cameras of SDR are provided as the input unit 30; whereas, in the second embodiment, four digital cameras including 2K1K and 4K2K are provided. However, only the task execution unit 8 that switches the high-resolution digital signal to the digital signal (DSDR) of the SDR is added. As the task execution unit 8 that detects an abnormality, the ninth task execution unit and the tenth task execution unit are provided in addition to the third task execution unit and the fourth task execution unit. However, the contents of the tasks and the programs thereof are the same as the contents of the task and the program of the third task execution unit or the fourth task execution unit in the first embodiment.

In the fifth task execution unit of the second embodiment, the parameters retained in the parameter retention unit 71 are changed. In the first embodiment, the destination of data acquisition is only 8-3 and 8-4; whereas, 8-9 and 8-10 are additionally changed in the second embodiment. The contents of the task or the program of the fifth task execution unit in the second embodiment are the same as the contents of the task or the program of the fifth task execution unit in the first embodiment.

In the second embodiment, parameters of the sixth task execution unit are changed. However, with only the change of parameters, the information processing device 1 still can also handle the change in which the screen split display is changed to the switching display and the number of cameras increases from two to four.

In the output execution unit 9 according to the second embodiment, the parameter retained in the parameter retention unit 71 is changed. With only the change of parameters, the information processing device 1 still can also handle the change in which the screen is switched to the switching display and the number of input cameras increases to four. The contents of the task or the program are the same as those of the output execution unit 9 in the first embodiment.

As described above, with only the minimum change, the same components are combined and only the parameter retained in the parameter retention unit 71 is changed such that it is possible to construct the system easily and reduce workload or steps required therefor even if a large change in which the number of digital cameras having different resolutions increases.

The information processing device 1 according to the embodiments described above has the following advantageous effects.

The information processing device 1 includes the parameter retention unit 71 that retains at least task information relating to a task to be executed on input data and connection destination information indicating a connection destination for acquiring the input data, the plurality of task execution units 8 that each acquire the input data based on the connection destination information and execute the task on the input data based on the task information to generate output data, and the output execution unit 9 that acquires the output data from each of the plurality of task execution units to output the output data to an external device.

Since each of the task execution units 8 only acquires the input data in accordance with parameter information and executes the task, it is simplified. Even in a complicated flowchart, the task execution units 8 are combined and implemented by the parameter information. Therefore, it is possible to facilitate construction of a system that performs processing on the input data and outputs the output data and reduce workload.

The plurality of task execution units 8 of the information processing device 1 includes at least the first task execution unit 8 that acquires the input data from the outside to generate the output data, and a task execution unit 8 in the same line that acquires the output data generated by the first task execution unit 8 as the input data to execute another task. The plurality of task execution units 8 of the information processing device 1 includes at least the task execution unit 8 that acquires the input data from the outside to generate the output data, and the task execution unit 8 that acquires the output data generated by the task execution unit as the input data to execute another task.

Even when the external device configuration is different, it still allows for prompt handling. For example, even when the interface of the external device is changed, the information processing device 1 still functions simply by changing the first task execution unit 8 that acquires the input data from the outside to generate the output data without any other change.

The plurality of task execution units 8 of the information processing device 1 handle the plurality of input data, and includes at least the task execution unit 8 that acquires certain input data from the outside to generate the output data, and the task execution unit 8 that acquires another input data from the outside to generate the output data.

Even when the execution contents are changed, by changing only the task execution unit 8 related to the changed contents, the information processing device 1 functions without any other changes.

The information processing device 1 includes a parameter changing unit that changes at least either one of the task information or the connection destination information retained in the parameter retention unit 71.

It is possible to change the processing flow of the information processing device only by changing the parameter by the parameter changing unit.

The task execution units of the information processing device each write the output data into the output data unit 83, which is a storage area unique thereto.

Since there is no confusion between an output of a certain task execution unit and an output of another task execution unit, it is possible to avoid a conflict in processing between tasks.

The task execution units of the information processing device each directly refer to memory or a data storage address to acquire the input data.

Since each of the task execution units reliably shares information, it is possible to avoid processing conflicts among the task execution units.

The task to be executed by each of the task execution units of the information processing device is selected from a plurality of preset tasks.

Since a preset task without a bug is executed, it is possible to suppress generation of a bug also in the information processing device overall. Since the program flow can be changed only by changing parameters given to the preset tasks, it is possible to reduce workload.

The plurality of task execution units of the information processing device execute tasks without synchronization with each other.

Since each task execution unit is independent, it is possible to realize asynchronous task execution. Since it is asynchronous, the timing shift does not cause any problems, and thus, it is possible to realize stable information processing.

For example, in the above-described embodiments, the configuration in which the information processing device 1 includes all the functional units such as the parameter retention unit 71, the task execution unit 8, and the output execution unit 9 have been illustrated; however, the information processing device of the present invention may be configured by a system in which the functional units are distributed and arranged in two or more physically separated computers. Further, the configuration of the functional unit included in the information processing device can be changed as appropriate, such as omitting a portion of the functional unit or adding another functional unit.

The series of processes described above can be executed by hardware or software. When a series of processes is executed by software, a program constituting the software is installed in a computer or the like from a network or a recording medium. The recording medium containing such a program is not only configured by a removable medium distributed separately from the device main body in order to provide the program to the user, but also a recording medium or the like provided to the user in a state of being incorporated in the device main body in advance. The removable medium is, for example, a magnetic disk (including a floppy disk), an optical disk, or a magneto-optical disk. The optical disc includes, for example, a CD-ROM (Compact Disk-Read Only Memory), a DVD (Digital Versatile Disk), a Blu-ray (registered trademark) Disc, and the like. The magneto-optical disk is composed of an MD (Mini-Disk) or the like. The recording medium provided to the user in a state of being incorporated in the device main body in advance is, for example, a program memory in which a program is recorded, a hard disk, or the like.

### EXPLANATION OF REFERENCE NUMERALS

1 information processing device,
2 parameter changing unit,
3 input interface,
4 output interface,
5 processor,
6 ROM,
7 RAM,
8 task execution unit,
8-1 first task execution unit,
8-2 second task execution unit,
9 output execution unit,
9-1 first output execution unit,
9-2 second output execution unit,
30 input unit
30-1 first input unit,
40 output unit,
40-1 first output unit,
71 parameter retention unit,
81 input data acquisition unit,
82 task execution program unit,
83 output data unit,
93 external output unit

## Claims

1. An information processing device (1) comprising:
a parameter retention unit (71) that retains parameter information including at least task information to define execution conditions required for a task to be executed on input data and connection destination information indicating a connection destination for acquiring the input data;
a plurality of task execution units (8) that each acquire the input data based on the connection destination information and execute the task on the input data based on the task information to generate output data;
an output execution unit (9) that acquires the output data from each of the plurality of task execution units (8), and outputs the output data to an external device,
wherein the plurality of task execution units (8) include at least
a task execution unit (8) executing a first task, that acquires the input data from outside and generates the output data, and
a task execution unit (8) that acquires the output data generated by the task execution unit (8) as input data and executes a second task; and
a parameter changing unit that changes at least either one of the task information or the connection destination information retained in the parameter retention unit (71),
wherein in response to changing the parameter information, a combination of each of the plurality of task execution units (8) selected based on the first task and the second task to be executed is changed,
wherein each of the plurality of task execution units writes the output data in an output data unit (83) that is a storage area unique thereto, and another task execution unit acquires the input data by directly referring to a memory of that output data unit (83) within the information processing device (1) or by directly using the data stored therein, without copying, and
wherein the connection destination information comprises said memory or data storage addresses of the output data units (83).

2. The information processing device (1) according to claim 1, wherein the plurality of task execution units (8) include at least
a task execution unit (8) that acquires the input data from outside and generates the output data, and
a task execution unit (8) that acquires input data different from the input data from outside and generates output data.

3. The information processing device (1) according to claim 1 or 2, wherein a task to be executed by each of the task execution units (8) is selected from a plurality of preset tasks.

4. The information processing device (1) according to any one of claims 1 to 3, wherein the plurality of task execution units (8) each execute the task without synchronization with each other.

5. A program to cause a computer to execute:
a parameter retention function that retains parameter information including at least task information to define execution conditions required for a task to be executed on input data and connection destination information indicating a connection destination for acquiring the input data;
a plurality of task execution functions that each acquire the input data based on the connection destination information and execute the task on the input data based on the task information to generate output data;
an output execution function that acquires the output data and outputs the output data to an external device,
wherein the plurality of task execution functions include at least
a task execution function executing a first task, that acquires the input data from outside and generates the output data, and
a task execution function that acquires the output data generated by the task execution function as input data and executes a second task; and
a parameter changing function that changes at least either one of the task information or the connection destination information retained in the parameter retention function,
wherein in response to changing the parameter information, a combination of each of the plurality of task execution functions selected based on the first task and the second task to be executed is changed,
wherein each of the plurality of task execution functions writes the output data in an output data unit (83) that is a storage area unique thereto, and another task execution function acquires the input data by directly referring to a memory of that output data unit (83) within the computer or by directly using the data stored therein, without copying, and
wherein the connection destination information comprises said memory or data storage addresses of the output data units (83).

6. A data processing method executable by a computer, the method comprising:
a parameter retention step of retaining parameter information including at least task information to define execution conditions required for a task to be executed on input data and connection destination information indicating a connection destination for acquiring the input data;
a plurality of task-execution steps of acquiring the input data based on the connection destination information and executing the task on the input data based on the task information to generate output data;
an output execution step of acquiring the output data and outputting the output data to an external device; and
a parameter changing step that changes at least either one of the task information or the connection destination information retained in the parameter retention step,
wherein the plurality of task execution steps include at least
a task execution step of executing a first task that acquires the input data from outside and generates the output data, and
a task execution step of acquiring the output data generated by the task execution step as input data and executing a second task,
wherein in response to changing the parameter information, a combination of each of the plurality of task execution steps selected based on the first task and the second task to be executed is changed,
wherein each of the plurality of task execution steps writes the output data in an output data unit (83) that is a storage area unique thereto, and another task execution step acquires the input data by directly referring to the memory of that output data unit (83) within the computer or by directly using the data stored therein, without copying, and
wherein the connection destination information comprises said memory or data storage addresses of the output data units (83).

## Patentansprüche

1. Informationsverarbeitungsvorrichtung (1), die aufweist:
eine Parametervorhalteeinheit (71), die Parameterinformationen vorhält, die zumindest Aufgabeninformationen, um Ausführungsbedingungen zu definieren, die für eine an Eingabedaten auszuführende Aufgabe erforderlich sind, und Verbindungszielinformationen umfasst, die ein Verbindungsziel zum Erhalten der Eingabedaten angeben;
eine Mehrzahl an Aufgabenausführungseinheiten (8), die jeweils die Eingabedaten basierend auf den Verbindungszielinformationen erhalten und die Aufgabe an den Eingabedaten basierend auf den Aufgabeninformationen ausführen, um Ausgabedaten zu erzeugen;
eine Ausgabeausführungseinheit (9), die die Ausgabedaten von jeder der Mehrzahl an Aufgabenausführungseinheiten (8) erhält und die Ausgabedaten an eine externe Vorrichtung ausgibt,
wobei die Mehrzahl an Aufgabenausführungseinheiten (8) zumindest
eine eine erste Aufgabe ausführende Aufgabenausführungseinheit (8), die die Eingabedaten von außerhalb erhält und die Ausgabedaten erzeugt, und
eine Aufgabenausführungseinheit (8) umfassen, die die Ausgabedaten, die von der Aufgabenausführungseinheit (8) erzeugt werden, als Eingabedaten erhält und eine zweite Aufgabe ausführt; und
eine Parameteränderungseinheit, die zumindest eines von den Aufgabeninformationen oder Verbindungszielinformationen ändert, die in der Parametervorhalteeinheit (71) vorgehalten werden,
wobei im Ansprechen auf ein Ändern der Parameterinformationen eine Kombination jeder der Mehrzahl an Aufgabenausführungseinheiten (8), die basierend auf der auszuführenden ersten Aufgabe und zweiten Aufgabe ausgewählt sind, geändert wird,
wobei jede der Mehrzahl an Aufgabenausführungseinheiten die Ausgabedaten in eine Ausgabedateneinheit (83) schreibt, die ein ihr eigener Speicherbereich ist, und eine andere Aufgabenausführungseinheit die Eingabedaten erhält, indem sie direkt auf einen Speicher dieser Ausgabedateneinheit (83) innerhalb der Informationsverarbeitungsvorrichtung (1) Bezug nimmt oder die darin gespeicherten Daten ohne Kopieren direkt verwendet, und
wobei die Verbindungszielinformationen die Speicher- oder Datenspeicheradressen der Ausgabedateneinheiten (83) aufweisen.

2. Informationsverarbeitungsvorrichtung (1) nach Anspruch 1, wobei die Mehrzahl an Aufgabenausführungseinheiten (8) zumindest
eine Aufgabenausführungseinheit (8), die die Eingabedaten von außerhalb erhält und die Ausgabedaten erzeugt, und
eine Aufgabenausführungseinheit (8) umfassen, die Eingabedaten erhält, die von den Eingabedaten von außerhalb verschieden sind und Ausgabedaten erzeugt.

3. Informationsverarbeitungsvorrichtung (1) nach Anspruch 1 oder 2, wobei eine von jeder der Aufgabenausführungseinheiten (8) auszuführende Aufgabe aus einer Mehrzahl von voreingestellten Aufgaben ausgewählt ist.

4. Informationsverarbeitungsvorrichtung (1) nach irgendeinem der Ansprüche 1 bis 3, wobei die Mehrzahl an Aufgabenausführungseinheiten (8) jeweils die Aufgabe ohne Synchronisation miteinander ausführen.

5. Programm, um einen Computer zu veranlassen, Folgendes auszuführen:
eine Parametervorhaltefunktion, die Parameterinformationen vorhält, die zumindest Aufgabeninformationen, um Ausführungsbedingungen zu definieren, die für eine an Eingabedaten auszuführende Aufgabe erforderlich sind, und Verbindungszielinformationen umfassen, die ein Verbindungsziel zum Erhalten der Eingabedaten angeben;
eine Mehrzahl an Aufgabenausführungsfunktionen, die jeweils die Eingabedaten basierend auf den Verbindungszielinformationen erhalten und die Aufgabe an den Eingabedaten basierend auf den Aufgabeninformationen ausführen, um Ausgabedaten zu erzeugen;
eine Ausgabeausführungsfunktion, die die Ausgabedaten erhält und die Ausgabedaten an eine externe Vorrichtung ausgibt,
wobei die Mehrzahl an Aufgabenausführungsfunktionen zumindest
eine eine erste Aufgabe ausführende Aufgabenausführungsfunktion, die die Eingabedaten von außerhalb erhält und die Ausgabedaten erzeugt, und
eine Aufgabenausführungsfunktion umfassen, die die Ausgabedaten, die von der Aufgabenausführungsfunktion erzeugt werden, als Eingabedaten erhält und eine zweite Aufgabe ausführt; und
eine Parameteränderungsfunktion, die zumindest eines von den Aufgabeninformationen oder Verbindungszielinformationen ändert, die in der Parametervorhaltefunktion vorgehalten werden,
wobei im Ansprechen auf ein Ändern der Parameterinformationen eine Kombination jeder der Mehrzahl an Aufgabenausführungsfunktionen, die basierend auf der auszuführenden ersten Aufgabe und zweiten Aufgabe ausgewählt sind, geändert wird,
wobei jede der Mehrzahl an Aufgabenausführungsfunktionen die Ausgabedaten in eine Ausgabedateneinheit (83) schreibt, die ein ihr eigener Speicherbereich ist, und eine andere Aufgabenausführungsfunktion die Eingabedaten erhält, indem sie direkt auf einen Speicher dieser Ausgabedateneinheit (83) innerhalb des Computers Bezug nimmt oder die darin gespeicherten Daten ohne Kopieren direkt verwendet, und
wobei die Verbindungszielinformationen die Speicher- oder Datenspeicheradressen der Ausgabedateneinheiten (83) aufweisen.

6. Datenverarbeitungsverfahren, das von einem Computer ausführbar ist, wobei das Verfahren aufweist:
einen Parametervorhalteschritt des Vorhaltens von Parameterinformationen, die zumindest Aufgabeninformationen, um Ausführungsbedingungen zu definieren, die für eine an Eingabedaten auszuführende Aufgabe erforderlich sind, und Verbindungszielinformationen umfassen, die ein Verbindungsziel zum Erhalten der Eingabedaten angeben;
eine Mehrzahl an Aufgabenausführungsschritten des Erhaltens der Eingabedaten basierend auf den Verbindungszielinformationen und des Ausführens der Aufgabe an den Eingabedaten basierend auf den Aufgabeninformationen, um Ausgabedaten zu erzeugen;
einen Ausgabeausführungsschritt des Erhaltens der Ausgabedaten und des Ausgebens der Ausgabedaten an eine externe Vorrichtung; und
einen Parameteränderungsschritt, der zumindest eines von den Aufgabeninformationen oder Verbindungszielinformationen ändert, die in dem Parametervorhalteschritt vorgehalten werden,
wobei die Mehrzahl an Aufgabenausführungsschritten zumindest
einen Aufgabenausführungsschritt des Ausführens einer ersten Aufgabe, der die Eingabedaten von außerhalb erhält und die Ausgabedaten erzeugt, und
einen Aufgabenausführungsschritt des Erhaltens der Ausgabedaten, die von dem Aufgabenausführungsschritt erzeugt werden, als Eingabedaten und des Ausführens einer zweiten Aufgabe umfassen,
wobei im Ansprechen auf ein Ändern der Parameterinformationen eine Kombination jedes der Mehrzahl an Aufgabenausführungsschritten, die basierend auf der auszuführenden ersten Aufgabe und zweiten Aufgabe ausgewählt sind, geändert wird,
wobei jeder der Mehrzahl an Aufgabenausführungsschritten die Ausgabedaten in eine Ausgabedateneinheit (83) schreibt, die ein ihr eigener Speicherbereich ist, und ein anderer Aufgabenausführungsschritt die Eingabedaten erhält, indem er direkt auf den Speicher dieser Ausgabedateneinheit (83) innerhalb des Computers Bezug nimmt oder die darin gespeicherten Daten ohne Kopieren direkt verwendet, und
wobei die Verbindungszielinformationen die Speicher- oder Datenspeicheradressen der Ausgabedateneinheiten (83) aufweisen.

## Revendications

1. Dispositif de traitement d'informations (1) comprenant :
une unité de conservation de paramètre (71) qui conserve des informations de paramètre incluant au moins des informations de tâche pour définir des conditions d'exécution requises pour qu'une tâche soit exécutée sur des données d'entrée et des informations de destination de connexion indiquant une destination de connexion pour l'acquisition des données d'entrée ;
une pluralité d'unités d'exécution de tâche (8) qui acquièrent chacune les données d'entrée sur la base des informations de destination de connexion et exécutent la tâche sur les données d'entrée sur la base des informations de tâche pour générer des données de sortie ;
une unité d'exécution de sortie (9) qui acquiert les données de sortie provenant de chacune de la pluralité d'unités d'exécution de tâche (8), et délivre en sortie les données de sortie vers un dispositif externe,
dans lequel la pluralité d'unités d'exécution de tâche (8) incluent au moins
une unité d'exécution de tâche (8) exécutant une première tâche, qui acquiert les données d'entrée provenant de l'extérieur et génère les données de sortie, et
une unité d'exécution de tâche (8) qui acquiert les données de sortie générées par l'unité d'exécution de tâche (8) en tant que données d'entrée et exécute une deuxième tâche ; et
une unité de modification de paramètre qui modifie au moins l'une ou l'autre parmi les informations de tâche ou les informations de destination de connexion conservées dans l'unité de conservation de paramètre (71),
dans lequel, en réponse à la modification des informations de paramètre, une combinaison de chacune de la pluralité d'unités d'exécution de tâche (8) sélectionnée sur la base de la première tâche et de la deuxième tâche à exécuter est modifiée,
dans lequel chacune de la pluralité d'unités d'exécution de tâche écrit les données de sortie dans une unité de données de sortie (83) qui est une zone de stockage unique à celle-ci, et une autre unité d'exécution de tâche acquiert les données d'entrée en se référant directement à une mémoire de cette unité de données de sortie (83) au sein du dispositif de traitement d'informations (1) ou en utilisant directement les données stockées en son sein, sans copie, et
dans lequel les informations de destination de connexion comprennent ladite mémoire ou des adresses de stockage de données des unités de données de sortie (83).

2. Dispositif de traitement d'informations (1) selon la revendication 1, dans lequel la pluralité d'unités d'exécution de tâche (8) incluent au moins
une unité d'exécution de tâche (8) qui acquiert les données d'entrée provenant de l'extérieur et génère les données de sortie, et
une unité d'exécution de tâche (8) qui acquiert des données d'entrée différentes des données d'entrée provenant de l'extérieur et génère des données de sortie.

3. Dispositif de traitement d'informations (1) selon la revendication 1 ou 2, dans lequel une tâche à exécuter par chacune des unités d'exécution de tâche (8) est sélectionnée parmi une pluralité de tâches prédéfinies.

4. Dispositif de traitement d'informations (1) selon l'une quelconque des revendications 1 à 3, dans lequel la pluralité d'unités d'exécution de tâche (8) exécutent chacune la tâche sans synchronisation les unes avec les autres.

5. Programme pour amener un ordinateur à exécuter :
une fonction de conservation de paramètre qui conserve des informations de paramètre incluant au moins des informations de tâche pour définir des conditions d'exécution requises pour qu'une tâche soit exécutée sur des données d'entrée et des informations de destination de connexion indiquant une destination de connexion pour l'acquisition des données d'entrée ;
une pluralité de fonctions d'exécution de tâche qui acquièrent chacune les données d'entrée sur la base des informations de destination de connexion et exécutent la tâche sur les données d'entrée sur la base des informations de tâche pour générer des données de sortie ;
une fonction d'exécution de sortie qui acquiert les données de sortie et délivre en sortie les données de sortie vers un dispositif externe,
dans lequel la pluralité de fonctions d'exécution de tâche incluent au moins
une fonction d'exécution de tâche exécutant une première tâche qui acquiert les données d'entrée provenant de l'extérieur et génère les données de sortie, et
une fonction d'exécution de tâche qui acquiert les données de sortie générées par la fonction d'exécution de tâche en tant que données d'entrée et exécute une deuxième tâche ; et
une fonction de modification de paramètre qui modifie au moins l'une ou l'autre parmi les informations de tâche ou les informations de destination de connexion conservées dans la fonction de conservation de paramètre,
dans lequel, en réponse à la modification des informations de paramètre, une combinaison de chacune de la pluralité de fonctions d'exécution de tâche sélectionnée sur la base de la première tâche et de la deuxième tâche à exécuter est modifiée,
dans lequel chacune de la pluralité de fonctions d'exécution de tâche écrit les données de sortie dans une unité de données de sortie (83) qui est une zone de stockage unique à celle-ci, et une autre fonction d'exécution de tâche acquiert les données d'entrée en se référant directement à une mémoire de cette unité de données de sortie (83) au sein de l'ordinateur ou en utilisant directement les données stockées en son sein, sans copie, et
dans lequel les informations de destination de connexion comprennent ladite mémoire ou des adresses de stockage de données des unités de données de sortie (83).

6. Procédé de traitement de données exécutable par un ordinateur, le procédé comprenant :
une étape de conservation de paramètre consistant à conserver des informations de paramètre incluant au moins des informations de tâche pour définir des conditions d'exécution requises pour qu'une tâche soit exécutée sur des données d'entrée et des informations de destination de connexion indiquant une destination de connexion pour l'acquisition des données d'entrée ;
une pluralité d'étapes d'exécution de tâche consistant à acquérir les données d'entrée sur la base des informations de destination de connexion et exécuter la tâche sur les données d'entrée sur la base des informations de tâche pour générer des données de sortie ;
une étape d'exécution de sortie consistant à acquérir les données de sortie et délivrer en sortie les données de sortie vers un dispositif externe ; et
une étape de modification de paramètre qui modifie au moins l'une ou l'autre parmi les informations de tâche ou les informations de destination de connexion conservées à l'étape de conservation de paramètre,
dans lequel la pluralité d'étapes d'exécution de tâche incluent au moins
une étape d'exécution de tâche consistant à exécuter une première tâche qui acquiert les données d'entrée provenant de l'extérieur et génère les données de sortie, et
une étape d'exécution de tâche consistant à acquérir les données de sortie générées par l'étape d'exécution de tâche en tant que données d'entrée et exécuter une deuxième tâche,
dans lequel, en réponse à la modification des informations de paramètre, une combinaison de chacune de la pluralité d'étapes d'exécution de tâche sélectionnée sur la base de la première tâche et de la deuxième tâche à exécuter est modifiée,
dans lequel chacune de la pluralité d'étapes d'exécution de tâche écrit les données de sortie dans une unité de données de sortie (83) qui est une zone de stockage unique à celle-ci, et une autre étape d'exécution de tâche acquiert les données d'entrée en se référant directement à la mémoire de cette unité de données de sortie (83) au sein de l'ordinateur ou en utilisant directement les données stockées en son sein, sans copie, et
dans lequel les informations de destination de connexion comprennent ladite mémoire ou des adresses de stockage de données des unités de données de sortie (83).
